# EUROPEAN PATENT SPECIFICATION

(11) **EP 3 666 960 B1**
(45) Date of publication and mention of the grant of the patent: **04.06.2025**
(21) Application number: 18843118.3
(22) Date of filing: 10.08.2018
(51) Int. Cl.: D06F 39/00, D06F 34/05

(54) **CLOTHES IDENTIFICATION SYSTEM FOR WASHING MACHINES, AND BINDING METHOD AND CLOTHES IDENTIFICATION METHOD OF SAID SYSTEM**
KLEIDUNGSIDENTIFIKATIONSSYSTEM FÜR WASCHMASCHINEN UND BINDEVERFAHREN UND KLEIDUNGSIDENTIFIKATIONSVERFAHREN DIESES SYSTEMS
SYSTÈME D'IDENTIFICATION DE VÊTEMENTS POUR MACHINES À LAVER, ET PROCÉDÉ DE LIAISON ET PROCÉDÉ D'IDENTIFICATION DE VÊTEMENTS DUDIT SYSTÈME

(30) Priority: 10.08.2017 CN 201710680019
(43) Date of publication of application: 17.06.2020
(73) Proprietor: Qingdao Haier Washing Machine Co., Ltd., Qingdao, Shandong 266101 (CN)
(72) Inventor: XU, Sheng, Qingdao Shandong 266101 (CN); YIN, Junming, Qingdao Shandong 266101 (CN); HUANG, Zhenxing, Qingdao Shandong 266101 (CN); SHU, Hai, Qingdao Shandong 266101 (CN)
(74) Representative: Ziebig Hengelhaupt Intellectual Property Attorneys Patentanwaltskanzlei PartGmbB
(86) International application number: PCT/CN2018/099870
(87) International publication number: WO 2019/029672

(56) References cited:
- EP-A1- 2 568 077
- CN-A- 103 820 971
- CN-A- 105 491 568
- CN-A- 105 553 808
- CN-A- 106 757 972
- CN-A- 106 917 223
- CN-A- 107 541 899
- DE-A1- 19 810 907
- US-A1- 2014 157 526
- US-A1- 2016 215 430

## Description

### TECHNICAL FIELD

The present invention belongs to the technical field of home designs, and particularly relates to a clothes identification system for a washing machine, and binding method a clothes identification method of said system.

### BACKGROUND

At present, all household washing machines on the market complete the washing work by control panels on the washing machines according to a program selected by a user before washing. A washing process usually includes washing time, washing temperature, a washing rotating speed, a washing water level, rinsing time, dewatering time, and the like which are stipulated by the selected program. However, these washing programs are less targeted for the care of laundry having different components. For household washing, the components of laundry are complex and changeable in composition. Ordinary users cannot make professional care judgments. This will cause uncleaned washing or waste of resources, and even serious washing damage to the laundry, such as wear, breakage, fading, staining, shrinkage, and deformation. At the same time, it is also difficult for even a laundry care expert to choose a suitable washing program for the laundry under the condition that there are a few of choices for washing programs of the washing machine.

In addition, the current washing machine is still at an exploratory stage for intelligent identification for laundry and customization of a washing program. No mature systems have been disclosed yet for the identification for laundry information and the optimal customization of the washing program.

The Chinese patent with the No. CN201410065568.1 discloses an intelligent washing method of a washing machine based on a wireless automatic identification technology. Laundry with smart labels, smart label reading equipment, intelligent information processing equipment of the washing machine, a washing machine operation display interface (a touch display screen), and a user are involved.

Another prior art document EP 256 8077 A1 discloses a laundry management system and a method for operating such a system. Laundry that passes through the system is identified using radio frequency identification (RFID), while the operation of the laundry machines (20) is monitored. As a result, information relating to the identification of the laundry items (10) during operation of the laundry machine (20) can be combined with information regarding that operation, providing useful information regarding the laundry history of particular items (10). There is also provided a laundry machine (20) having an RFID reader with an antenna (26) located in such a position that the drum (22) of the machine acts to amplify signals originating from the laundry items (10).

In view of this, the present disclosure is provided.

### SUMMARY

In order to overcome the disadvantages in the prior art, the present invention provides a laundry identification system of a washing machine and binding and laundry identification methods of the system. A laundry identification wireless module combining a laundry identification module and a wireless module is mounted on the washing machine to send a control instruction to a corresponding washing machine controller through a server according to laundry data, thereby realizing an intelligent washing and care function for laundry.

In order to solve the above technical problem, the basic idea of the technical solution of the present disclosure is that: a laundry identification system of a washing machine, including a laundry identification wireless module, a mobile terminal, and a server.

The laundry identification wireless module is an element combining a laundry identification module and a wireless module to identify a laundry label and transmit label information to the server.

The server receives the laundry label information, parses the laundry label information into corresponding laundry information, sends the laundry information to the washing machine and/or the mobile terminal for displaying, acquires washing program parameters corresponding to the laundry according to the laundry information, and sends the washing program parameters to the washing machine. The washing machine executes a washing action according to the acquired parameters, and the washing program parameters include a washing program, a washing water level, washing water temperature, washing time, washing rotating speed, washing rotating time, washing stop time, a number of times of rinsing, dewatering time, dewatering rotating speed, and the like.

The mobile terminal receives the information sent by the server, and displays the information to a user.

A laundry identification system of a washing machine includes a laundry identification wireless module, a mobile terminal, and a server.

The laundry identification wireless module is an element combining a laundry identification module and a wireless module to identify a laundry label and transmit label information to the server.

The server receives the laundry label information, parses the laundry label information into corresponding laundry information, and sends the laundry information to the washing machine and/or the mobile terminal for displaying.

The mobile terminal receives the laundry information sent by the server, and displays the laundry information to a user. The mobile terminal or the washing machine acquires washing program parameters according to the acquired laundry information, and the mobile terminal has a washing start function. The washing program parameters include a washing program, a washing water level, washing water temperature, washing time, washing rotating speed, washing rotating time, washing stop time, a number of times of rinsing, dewatering time, dewatering rotating speed, and the like.

The laundry identification wireless module has functions of laundry label identification and network transmission. The server has functions of data transmission and receiving, data parsing, data analysis, data storage, and data computation processing. The mobile terminal has functions of laundry information displaying and laundry information computation processing, and the mobile terminal is a mobile phone or an ipad. The washing machine holds the laundry identification wireless module, so as to receive and report data and execute a control instruction. A screen of the washing machine has functions of laundry information displaying and laundry information processing.

The identifiable label of the laundry is a Radio Frequency Identification (RFID) label. The laundry identification module is a RFID laundry identification module which is combined with the wireless module to form the RFID laundry identification wireless module. The RFID label is read conveniently and fast. Data is read without a light source, and even may be read through an external package. Label data may be dynamically changed. The RFID laundry identification module is high in identification speed, high in data capacity, long in service life, and wide in application range. The RFID laundry identification wireless module may send the control instruction to a corresponding washing machine controller through the server according to the laundry data, thereby realizing an intelligent washing and care function for the laundry

The laundry identification wireless module is an independent module, has an independent power supply, and is detachably mounted on the washing machine. Or, a mounting structure is designed by a manufacturer according to the structure and the mounting position of the module, and a corresponding power supply terminal is provided for power supplying. The laundry identification wireless module and the washing machine are not of an integrated structure, but are disposed separately, so that they are high in use sensitivity and convenient to replace.

The mobile terminal has an equipment binding function. The wireless module in the laundry identification wireless module has a network configuration mode which is a factory setting, so that the wireless module may be connected to a router through network configuration performed by the mobile terminal. A button for returning to the factory setting is arranged on the laundry identification wireless module. After the button is pressed, the laundry identification wireless module returns to the network configuration mode. The wireless module has the network configuration mode which is the factory setting, and may be directly subjected to the network configuration, thereby avoiding a step that the user adjusts the wireless module into the network configuration mode, and this is user-friendly. The button for returning to the factory setting is arranged on the laundry identification wireless module, so that if there is something wrong with the washing machine during use of the user, and the user cannot find out a cause, this button may be pressed to re-perform the network configuration.

The mobile terminal is the mobile phone or the ipad. The two mobile terminals are popular, and convenient to carry and use. The wireless module of the laundry identification wireless module is a Wi-Fi module which is widely popular, suitable for more users, simple in configuration, high in wireless speed, and relatively good in user experience.

A laundry identification wireless module configuration and binding method of a laundry identification system of a washing machine includes the following steps:
S1, enabling a laundry identification wireless module to enter a network configuration mode;
S2, connecting a mobile terminal to a router at home;
S3, configuring, by the mobile terminal, the laundry identification wireless module;
S4, connecting the laundry identification wireless module to the router at home; and
S5, performing, by the mobile terminal, binding configuration on the laundry identification wireless module and the washing machine under the same network.

Specific operations of the steps S3 and S4 are as follows:
the mobile terminal configures the laundry identification wireless module to the corresponding router according to an existing softapp or a smartlink binding process to enable the laundry identification wireless module to have a networking function.

A specific operation of the step S5 is as follows:
after the step S4, the mobile terminal configures the washing machine to be under the same network and establishes a binding relationship between the laundry identification wireless module and the washing machine to enable information to be sent between the laundry identification wireless module and the washing machine.

A laundry identification method of a laundry identification system of a washing machine includes the following steps:
a user throws labeled laundry into the washing machine, or the user needs to do a laundry identification action in the vicinity of a laundry identification module when throwing the laundry;
S1, identifying, by a laundry identification wireless module, the laundry thrown by the user to acquire corresponding laundry label information;
S2, sending, by the laundry identification wireless module, the label information to a server through a wireless module;
S3, performing, by the server, data parsing according to the label data and a corresponding decoding rule to acquire information of the identified laundry, making a logic judgment and calculating program parameters according to the laundry information, returning, by the server, the laundry information to a mobile terminal or a display screen of a washing machine terminal, and returning washing program parameters to a washing machine control panel;
or, performing, by the server, data parsing according to the label data and a corresponding decoding rule to acquire information of the identified laundry, returning the laundry information to a mobile terminal or a display screen of a washing machine terminal, displaying the laundry by the mobile terminal and/or the washing machine terminal with a screen after acquiring the laundry information, calculating program parameters according to the acquired laundry information, and returning washing program parameters to a washing machine control panel;
S4, displaying the laundry by the mobile terminal and/or the washing machine terminal with a screen after acquiring the laundry information;
S5, washing the laundry by the washing machine terminal after receiving the washing program parameters.

After the washing machine terminal or the mobile terminal selects startup, a Radio Frequency Identification (RFID) laundry identification wireless module starts to work, and finally acquires the laundry information and the washing program parameters from the server. The laundry information may be checked by the user to determine whether a washing mode is correct, and the washing program parameters control the washing machine to wash the laundry to realize an exclusive washing and care function and an accurate washing and care function.

Compared with the prior art, by the adoption of the above technical solutions, the present disclosure has the following beneficial effects.
1. The RFID label is read conveniently and fast. The data is read without a light source, and even may be read through an external package. The label data may be dynamically changed.
2. The RFID laundry identification module is high in identification speed, high in data capacity, long in service life, and wide in application range.
3. The RFID laundry identification wireless module may send the control instruction to the corresponding washing machine controller through the server according to the laundry data, thereby realizing the intelligent washing and care function for the laundry.
4. The laundry identification wireless module and the washing machine are not of an integrated structure, but are disposed separately, so that they are high in use sensitivity and convenient to replace.
5. The wireless module has the network configuration mode which is the factory setting, and may be directly subjected to the network configuration, thereby avoiding the step that the user adjusts the wireless module into the network configuration mode, and this is user-friendly.
6. The button for returning to the factory setting is arranged on the laundry identification wireless module, so that if there is something wrong with the washing machine during use, and the user cannot find out a cause, this button may be pressed to re-perform the network configuration.
7. The mobile terminal is the mobile phone terminal or the ipad terminal. The two mobile terminals are popular, and convenient to carry and use.
8. The wireless module of the laundry identification wireless module is the wifi module which is widely popular, suitable for more users, simple in configuration, high in wireless speed, and relatively good in user experience.
9. The mobile terminal establishes the binding relationship between the laundry identification wireless module and the washing machine to enable information to be sent between the laundry identification wireless module and the washing machine.
10. After the washing machine terminal or the mobile terminal selects startup, the RFID laundry identification wireless module starts to work, and finally acquires the laundry information and/or the washing program parameters from the server. The laundry information may be checked by the user through the mobile terminal or the display screen of the washing machine to determine whether the washing mode is correct, and the washing program parameters control the washing machine to wash the laundry to realize the exclusive washing and care function and the accurate washing and care function.

The specific implementations of the present disclosure are further described below in detail in combination with the accompanying drawings.

### BRIEF DESCRIPTION OF THE DRAWINGS

The drawings constitute one part of the present invention and are used to provide a further understanding of the present disclosure. Illustrative embodiments and descriptions thereof of the present invention are used to explain the present invention and do not constitute an improper limitation to the present invention.

Obviously, the drawings described below are only some embodiments, and those skilled in the art can obtain other drawings according to these drawings without paying any creative work. In the drawings:
Fig. 1 is a schematic flow diagram of laundry identification of the present invention;
Fig. 2 is a schematic flow diagram of binding configuration of the present invention; and
Fig. 3 is a schematic diagram of an entire structure of a Radio Frequency Identification (RFID) laundry identification wireless module of the present invention.

It should be noted that these drawings and text descriptions are not intended to limit the conceptual scope of the present invention in any form but are to describe the concept of the present disclosure to those skilled in the art with reference to specific embodiments.

### DETAILED DESCRIPTION OF THE EMBODIMENTS

In order to make the objectives, technical solutions and advantages of the embodiments of the present invention clearer, the technical solutions in the embodiments will be described clearly and completely below in conjunction with the drawings in the embodiments of the present invention.

The following embodiments are used to describe the present invention, but not intended to limit the scope of the present invention.

In the description of the present invention, it should be noted that orientations or positional relationships indicated by the terms "upper", "lower", "front", "rear", "left", "right", "vertical", "inside", "outside" and the like are orientations or positional relationships as shown in the drawings, and are only for the purpose of facilitating and simplifying the description of the present disclosure instead of indicating or implying that devices or elements indicated must have particular orientations, and be constructed and operated in the particular orientations, so that these terms are not construed as limiting the present invention.

In the description of the present disclosure, it should be noted that unless otherwise explicitly stipulated and defined, the terms "installed", "connected", and "coupled" need to be understood broadly, and may be, for example, fixedly connected, or detachably connected, or integrally connected, or mechanically connected, or electrically connected, or directly connected, or indirectly connected through an intermediate medium. Those of ordinary skill in the art can understand the specific meanings of the above terms in the present disclosure according to specific situations.

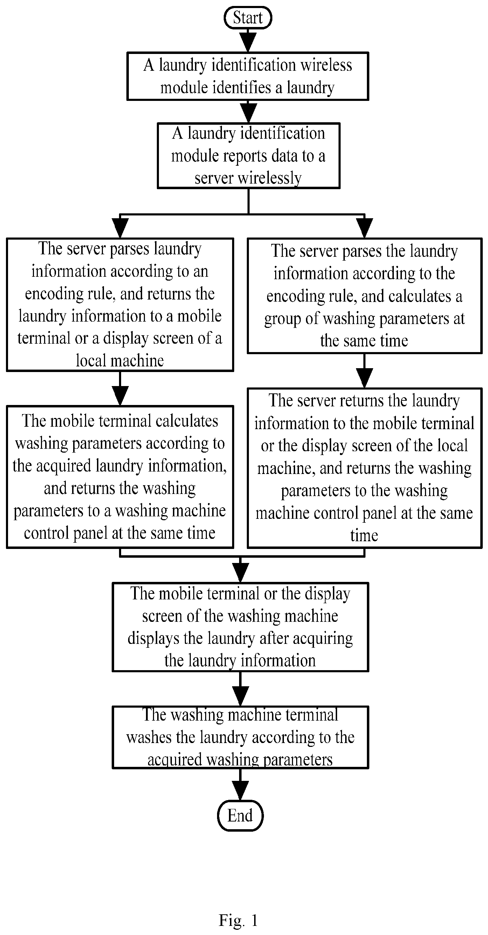

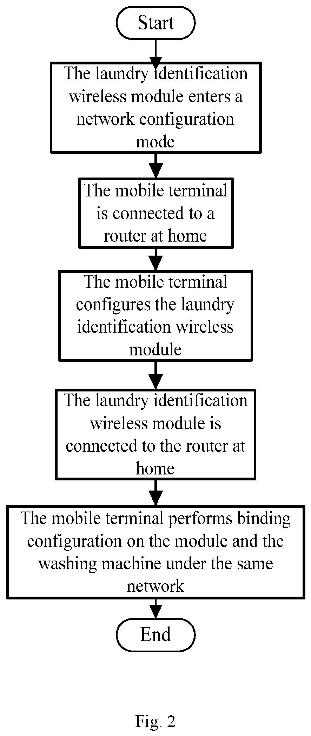

As shown in Fig. 1 and Fig. 2, a laundry identification system of a washing machine of the present disclosure includes a laundry identification wireless module, a mobile terminal, and a server.

The laundry identification wireless module is an element combining a laundry identification module and a wireless module to identify a laundry label and transmit label information to the server.

The server receives the laundry label information, parses the laundry label information into corresponding laundry information, sends the laundry information to the washing machine and/or the mobile terminal for displaying, acquires washing program parameters corresponding to the laundry according to the laundry information, and sends the washing program parameters to the washing machine. The washing machine executes a washing action according to the acquired parameters, and the washing program parameters include a washing program, a washing water level, washing water temperature, washing time, washing rotating speed, washing rotating time, washing stop time, a number of times of rinsing, dewatering time, dewatering rotating speed, and the like.

The mobile terminal receives the laundry information sent by the server, and displays the information to a user.

A laundry identification system of a washing machine includes a laundry identification wireless module, a mobile terminal, and a server.

The laundry identification wireless module is an element combining a laundry identification module and a wireless module to identify a laundry label and transmit label information to the server.

The server receives the laundry label information, parses the laundry label information into corresponding laundry information, and sends the laundry information to the washing machine and/or the mobile terminal for displaying.

The mobile terminal receives the laundry information sent by the server, and displays the laundry information to a user. The mobile terminal or the washing machine acquires washing program parameters according to the acquired laundry information, and the mobile terminal has a washing start function. The washing program parameters include a washing program, a washing water level, washing water temperature, washing time, washing rotating speed, washing rotating time, washing stop time, a number of times of rinsing, dewatering time, dewatering rotating speed, and the like.

The laundry identification wireless module has functions of laundry label identification and network transmission. The server has functions of data transmission and receiving, data parsing, data analysis, data storage, and data computation processing. The mobile terminal has functions of laundry information displaying and laundry information computation processing and is a mobile phone or an ipad. The washing machine holds the laundry identification wireless module, so as to receive and report data and execute a control instruction. A screen of the washing machine has functions of laundry information displaying and laundry information processing.

The mobile terminal has an equipment binding function. The wireless module in the laundry identification wireless module has a network configuration mode which is a factory setting, so that the wireless module may be connected to a router through network configuration performed by the mobile terminal. A button for returning to the factory setting is arranged on the laundry identification wireless module. After the button is pressed, the laundry identification wireless module returns to the network configuration mode. The wireless module has the network configuration mode which is the factory setting, and may be directly subjected to the network configuration, thereby avoiding a step that the user adjusts the wireless module into the network configuration mode, and this is user-friendly. The button for returning to the factory setting is arranged on the laundry identification wireless module, so that if there is something wrong with the washing machine during use of the user, and the user cannot find out a cause, this button may be pressed to re-perform the network configuration.

A laundry identification wireless module configuration and binding method of a laundry identification system of a washing machine includes the following steps that:
S1, a laundry identification wireless module enters a network configuration mode;
S2, a mobile terminal is connected to a router at home;
S3, the mobile terminal configures the laundry identification wireless module;
S4, the laundry identification wireless module is connected to the router at home; and
S5, the mobile terminal performs binding configuration on the laundry identification wireless module and the washing machine under the same network.

A laundry identification method of a laundry identification system of a washing machine includes the following steps that:
a user throws labeled laundry into the washing machine, or the user needs to do a laundry identification action in the vicinity of a laundry identification module when throwing the laundry;
S1, a laundry identification wireless module identifies the laundry thrown by the user to acquire corresponding laundry label information;
S2, the laundry identification wireless module sends the label information to a server through a wireless module;
S3, the server performs data parsing according to the label data and a corresponding decoding rule to acquire information of the identified laundry, and makes a logic judgment and calculates program parameters according to the laundry information; the server returns the laundry information to a mobile terminal or a display screen of a washing machine terminal, and returns washing program parameters to a washing machine control panel;
or the server performs data parsing according to the label data and a corresponding decoding rule to acquire information of the identified laundry, and returns the laundry information to a mobile terminal or a display screen of a washing machine terminal; the mobile terminal and/or the washing machine terminal with a screen displays the laundry after acquiring the laundry information, calculates program parameters according to the acquired laundry information, and returns washing program parameters to a washing machine control panel;
S4, the mobile terminal and/or the washing machine terminal with a screen displays the laundry after acquiring the laundry information;
S5, the washing machine terminal washes the laundry after receiving the washing program parameters.

After the washing machine terminal or the mobile terminal selects startup, a Radio Frequency Identification (RFID) laundry identification wireless module starts to work, and finally acquires the laundry information and the washing program parameters from the server. The laundry information may be checked by the user to determine whether a washing mode is correct, and the washing program parameters control the washing machine to wash the laundry to realize an exclusive washing and care function and an accurate washing and care function.

### Embodiment I

The identifiable label of the laundry of the present embodiment is a RFID label. The laundry identification module is a RFID laundry identification module which is combined with the wireless module to form the RFID laundry identification wireless module. The RFID label is read conveniently and fast. Data is read without a light source, is transmitted wirelessly, and even may be read through an external package. Label data may be dynamically changed. The RFID laundry identification module is high in identification speed, high in data capacity, long in service life, and wide in application range. The RFID laundry identification wireless module may send the control instruction to the washing machine and the mobile terminal through the server according to the laundry data, and the washing machine calculates the washing parameters according to the acquired laundry information or washes the laundry according to the acquired washing parameters, thereby realizing an intelligent washing and care function for the laundry.

### Embodiment II

The laundry identification wireless module of the present embodiment is an independent module, so that the user can install it on the washing machine by own. The laundry identification wireless module has an independent power supply for power supplying. Or, a mounting structure is designed by a manufacturer according to the structure and the mounting position of the module, and a corresponding power supply terminal is provided for power supplying. If the laundry identification wireless module is damaged, the user may purchase this module separately, and install it on the washing machine by own. The laundry identification wireless module and the washing machine are not of an integrated structure, but are disposed separately, so that they are high in use sensitivity and convenient to replace.

### Embodiment III

The mobile terminal of the present embodiment is the mobile phone or the ipad. The two mobile terminals are popular, and convenient to carry and use. The wireless module of the laundry identification wireless module is a Wi-Fi module which is widely popular, suitable for more users, simple in configuration, high in wireless speed, and relatively good in user experience.

### Embodiment IV

Specific operations of the steps S3 and S4 of the laundry identification wireless module configuration and binding method of the laundry identification system of the washing machine of the present embodiment are as follows:
the mobile terminal configures the laundry identification wireless module to the corresponding router according to an existing softapp or a smartlink binding process to enable the laundry identification wireless module to have a networking function.

A specific operation of the step S5 of the laundry identification wireless module configuration and binding method of the laundry identification system of the washing machine is as follows:
after the step S4, the mobile terminal configures the washing machine to be under the same network and establishes a binding relationship between the laundry identification wireless module and the washing machine to enable information to be sent between the laundry identification wireless module and the washing machine.

### Embodiment V

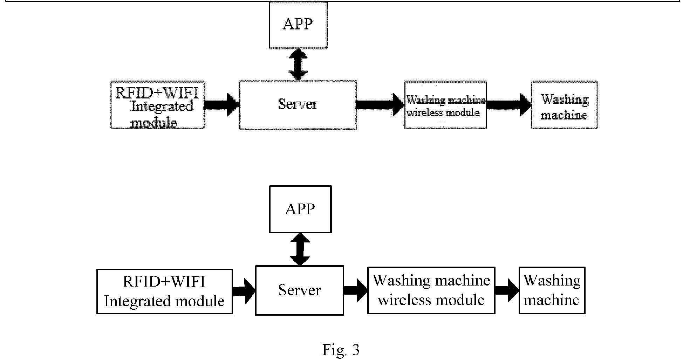

As shown in Fig. 3, the laundry identification wireless module of the present embodiment combines the RFID laundry identification module and the Wi-Fi module, and thus has a laundry label identification function, a data sending function, and a network transmission function. After detecting the laundry label, the RFID laundry identification wireless module reads the laundry label information and sends it to the server through the wireless module. The server has the data collection, processing and sending functions. After receiving the laundry data, the server parses the laundry data to acquire the corresponding laundry information, calculates the corresponding washing parameters according to the laundry information, and sends the corresponding laundry information and a corresponding washing parameter control instruction to a washing machine control panel, and the washing machine executes a corresponding washing process. The wireless module of the washing machine is in charge of receiving a command and the data from the server, and sending the command and the data to the washing machine. The mobile terminal App is in charge of network adaptation of the RFID laundry identification wireless module, and is in charge of establishing a binding relationship between the RFID laundry identification wireless module and the corresponding Internet of things washing machine and displaying the laundry information.

### Embodiment VI

When a user throws corresponding labeled laundry into the washing machine, the RFID laundry identification wireless module acquires corresponding laundry label information, and sends the label information to a background of the server through the wireless module. The server performs data parsing according to the label data and a corresponding decoding rule, and acquires information of the identified laundry. On one hand, the corresponding laundry data acquired according to the information of the identified laundry is returned to the corresponding mobile terminal or washing machine terminal for displaying; and on the other hand, a corresponding group of washing program parameters are calculated according to the laundry information and a relevant algorithm, and then are returned to the washing terminal for washing. After acquiring the laundry data, the mobile terminal displays the corresponding laundry. After receiving the laundry information, the washing machine terminal with the screen also displays the corresponding laundry.

The above descriptions are only preferred embodiments of the present invention, but not intended to limit the present invention in any forms. Although the present invention is disclosed above by the preferred embodiments, the preferred embodiments are not intended to limit the present invention. Any person skilled in the art can make some changes by using the above-mentioned technical contents or modify the technical contents as equivalent embodiments of equivalent changes without departing from the scope of the technical solution of the present invention.

## Claims

1. A laundry identification system of a washing machine, comprising a laundry identification wireless module, a mobile terminal, and a server, wherein
the laundry identification wireless module is an element combining a laundry identification module and a wireless module to identify a laundry label and transmit laundry label information to the server;
the server is for receiving the laundry label information, parsing the laundry label information into corresponding laundry information, sending the laundry information to the washing machine and/or the mobile terminal for displaying, acquiring washing program parameters corresponding to the laundry according to the laundry information, and sending the washing program parameters to the washing machine; wherein, the washing machine performs a washing action according to the washing program parameters acquired; and
the mobile terminal is for receiving the laundry information sent by the server and displaying the laundry information to a user, **characterized in that** the laundry identification wireless module is an independent module detachably mounted on the washing machine.

2. The laundry identification system of the washing machine according to claim 1, wherein the laundry identification wireless module has functions of laundry label identification and network transmission;
the server has functions of data transmission and receiving, data parsing, data analysis, data storage, and data computation processing;
the mobile terminal has functions of laundry information displaying and laundry information computation processing, and the mobile terminal is a mobile phone or an ipad;
the washing machine is equipped with the laundry identification wireless module, so as to receive and report data and execute a control instruction; and a screen of the washing machine has functions of laundry information displaying and laundry information processing.

3. The laundry identification system of the washing machine according to any one of claims 1 to 2, wherein an identifiable label of the laundry is RFID label; the laundry identification module is a RFID laundry identification module which is combined with the wireless module to form the RFID laundry identification wireless module; and the wireless module is a Wi-Fi module.

4. The laundry identification system of the washing machine according to any one of claims 1 to 3, wherein the mobile terminal has an equipment binding function; the wireless module in the laundry identification wireless module has a network configuration mode which is a factory setting, so that the mobile terminal performs network configuration to the wireless module to connect the wireless module to a router through ; a button for returning to the factory setting is arranged on the laundry identification wireless module; and after the button is pressed, the laundry identification wireless module returns to the network configuration mode.

5. A laundry identification wireless module configuration and binding method of the laundry identification system of the washing machine according to any one of claims 1 to 4, comprising the following steps:
S1, enabling a laundry identification wireless module to enter a network configuration mode;
S2, connecting a mobile terminal to a router at home;
S3, configuring, by the mobile terminal, the laundry identification wireless module;
S4, connecting the laundry identification wireless module to the router at home; and
S5, performing, by the mobile terminal, binding configuration on the laundry identification wireless module and the washing machine under the same network.

6. The laundry identification wireless module configuration and binding method of the laundry identification system of the washing machine according to claim 5, wherein specific operations of the steps S3 and S4 are as follows:
the mobile terminal configures the laundry identification wireless module to the router according to a softapp or a smartlink binding process to enable the laundry identification wireless module to have a networking function.

7. The laundry identification wireless module configuration and binding method of the laundry identification system of the washing machine according to claim 5, wherein a specific operation of the step S5 is as follows:
after the step S4, the mobile terminal configures the washing machine to be under the same network and establishes a binding relationship between the laundry identification wireless module and the washing machine.

8. A laundry identification method of the laundry identification system of the washing machine according to any one of claims 1 to 4, comprising the following steps:
S1, identifying, by the laundry identification wireless module, the laundry thrown by the user to acquire the laundry label information;
S2, sending, by the laundry identification wireless module, the laundry label information to the server through the wireless module;
S3, performing, by the server, data parsing according to label data and a corresponding decoding rule to acquire laundry information of the laundry identified, making a logic judgment and calculating program parameters according to the laundry information,
returning, by the server, the laundry information to the mobile terminal or the display screen of the washing machine terminal, and returning washing program parameters to a washing machine control panel;
S4, displaying the laundry by the mobile terminal and/or the washing machine terminal with the display screen after acquiring the laundry information; and
S5, washing the laundry by the washing machine terminal after receiving the washing program parameters.

## Patentansprüche

1. Kleidungsidentifikationssystem einer Waschmaschine, aufweisend ein drahtloses Kleidungsidentifikationsmodul, ein mobiles Endgerät und einen Server, wobei
das drahtlose Kleidungsidentifikationsmodul ein Element ist, das ein Kleidungsidentifikationsmodul und ein drahtloses Modul kombiniert, um ein Kleidungsetikett zu identifizieren und Kleidungsetikettinformationen an den Server zu übertragen;
der Server zum Empfangen der Kleidungsetikettinformationen, zum Parsen der Kleidungsetikettinformationen zu entsprechenden Kleidungsinformationen, zum Senden der Kleidungsinformationen an die Waschmaschine und/oder das mobile Endgerät zur Anzeige, zum Beziehen von der Kleidung entsprechenden Waschprogrammparametern gemäß den Kleidungsinformationen und zum Senden der Waschprogrammparameter an die Waschmaschine dient; wobei die Waschmaschine einen Waschvorgang gemäß den bezogenen Waschprogrammparametern durchführt; und
das mobile Endgerät zum Empfangen der von dem Server gesendeten Kleidungsinformationen und zum Anzeigen der Kleidungsinformationen für einen Benutzer dient, **gekennzeichnet dadurch, dass** das drahtlose Kleidungsidentifikationsmodul ein unabhängiges Modul ist, das abnehmbar an der Waschmaschine montiert ist.

2. Kleidungsidentifikationssystem der Waschmaschine nach Anspruch 1, wobei das drahtlose Kleidungsidentifikationsmodul Funktionen zur Kleidungsetikett-Identifikation und Netzwerkübertragung aufweist;
der Server Funktionen zur Datenübertragung und zum Datenempfang, zum Parsen von Daten, zur Datenanalyse, zur Datenspeicherung und zur Datenberechnungsverarbeitung aufweist;
das mobile Endgerät Funktionen zum Anzeigen von Kleidungsinformationen und zur Berechnungsverarbeitung von Kleidungsinformationen aufweist und das mobile Endgerät ein Mobiltelefon oder ein iPad ist;
die Waschmaschine mit dem drahtlosen Kleidungsidentifikationsmodul versehen ist, um Daten zu empfangen und zu melden und eine Steueranweisung auszuführen; und ein Bildschirm der Waschmaschine Funktionen zum Anzeigen von Kleidungsinformationen und zur Verarbeitung von Kleidungsinformationen aufweist.

3. Kleidungsidentifikationssystem der Waschmaschine nach einem der Ansprüche 1 bis 2, wobei ein identifizierbares Etikett der Kleidung ein RFID-Etikett ist; das Kleidungsidentifikationsmodul ein RFID-Kleidungsidentifikationsmodul ist, das mit dem drahtlosen Modul kombiniert ist, um das drahtlose RFID-Kleidungsidentifikationsmodul zu bilden; und das drahtlose Modul ein WLAN-Modul ist.

4. Kleidungsidentifikationssystem der Waschmaschine nach einem der Ansprüche 1 bis 3, wobei das mobile Endgerät eine Gerätebindungsfunktion aufweist; das drahtlose Modul in dem drahtlosen Kleidungsidentifikationsmodul einen Netzwerkeinrichtmodus aufweist, der eine Werkseinstellung ist, sodass das mobile Endgerät ein Netzwerk an dem drahtlosen Modul einrichtet, um das drahtlose Modul über mit einem Router zu verbinden; eine Taste zur Rückkehr zu der Werkseinstellung an dem drahtlosen Kleidungsidentifikationsmodul angeordnet ist; und das drahtlose Kleidungsidentifikationsmodul nach einem Drücken der Taste zu dem Netzwerkeinrichtmodus zurückkehrt.

5. Einricht- und Bindeverfahren für das drahtlose Kleidungsidentifikationsmodul des Kleidungsidentifikationssystems der Waschmaschine nach einem der Ansprüche 1 bis 4, umfassend die Schritte:
S1, Ermöglichen eines drahtlosen Kleidungsidentifikationsmoduls, in einen Netzwerkeinrichtmodus einzutreten;
S2, Verbinden eines mobilen Endgeräts mit einem Router zu Hause;
S3, Einrichten des drahtlosen Kleidungsidentifikationsmoduls durch das mobile Endgerät;
S4, Verbinden des drahtlosen Kleidungsidentifikationsmoduls mit dem Router zu Hause; und
S5, Vornehmen einer Bindungseinrichtung an dem drahtlosen Kleidungsidentifikationsmodul und der Waschmaschine in demselben Netzwerk durch das mobile Endgerät.

6. Einricht- und Bindeverfahren für das drahtlose Kleidungsidentifikationsmodul des Kleidungsidentifikationssystems der Waschmaschine nach Anspruch 5, wobei spezifische Vorgänge der Schritte S3 und S5 umfassen, dass
das mobile Endgerät das drahtlose Kleidungsidentifikationsmodul gemäß einem Softapp- oder Smartlink-Bindeprozess an dem Router einrichtet, um zu ermöglichen, dass das drahtlose Kleidungsidentifikationsmodul eine Netzwerkfunktion aufweist.

7. Einricht- und Bindeverfahren für das drahtlose Kleidungsidentifikationsmodul des Kleidungsidentifikationssystems der Waschmaschine nach Anspruch 5, wobei ein spezifischer Vorgang des Schritts S5 umfasst, dass
das mobile Endgerät nach Schritt S4 die Waschmaschine derart einrichtet, dass sich beide in demselben Netzwerk befinden, und eine Bindungsbeziehung zwischen dem drahtlosen Kleidungsidentifikationsmodul und der Waschmaschine herstellt.

8. Kleidungsidentifikationsverfahren des Kleidungsidentifikationssystems der Waschmaschine nach einem der Ansprüche 1 bis 4, umfassend die folgenden Schritte:
S1, Identifizieren der vom Benutzer eingeworfenen Kleidung durch das drahtlose Kleidungsidentifikationsmodul, um die Kleidungsetikettinformationen zu beziehen;
S2, Senden der Kleidungsetikettinformationen an den Server über das drahtlose Modul durch das drahtlose Kleidungsidentifikationsmodul;
S3, Parsen von Daten gemäß Etikett-Daten und einer entsprechenden Decodierungsregel durch den Server, um Kleidungsinformationen der identifizierten Kleidung zu beziehen, Vornehmen einer logischen Beurteilung und Berechnen von Programmparametern gemäß den Kleidungsinformationen,
Zurückgeben der Kleidungsinformationen an das mobile Endgerät oder den Anzeigebildschirm des Waschmaschinenendgeräts durch den Server und Zurückgeben von Waschprogrammparametem an ein Waschmaschinen-Steuerfeld;
S4, Anzeigen der Kleidung durch das mobile Endgerät und/oder das Waschmaschinenendgerät mit dem Anzeigebildschirm nach dem Beziehen der Kleidungsinformationen; und
S5, Waschen der Kleidung durch das Waschmaschinenendgerät nach dem Empfangen der Waschprogrammparameter.

## Revendications

1. Système d'identification du linge d'une machine à laver, comprenant un module sans fil d'identification du linge, un terminal mobile et un serveur, dans lequel
le module sans fil d'identification du linge est un élément combinant un module d'identification du linge et un module sans fil permettant d'identifier une étiquette du linge et transmettre des informations de l'étiquette du linge au serveur;
le serveur est destiné à recevoir les informations de l'étiquette du linge, à décomposer les informations de l'étiquette du linge en informations du linge correspondantes, à envoyer les informations du linge à la machine à laver et/ou au terminal mobile pour affichage, à acquérir des paramètres de programme de lavage correspondant au linge en fonction des informations du linge, et à envoyer les paramètres de programme de lavage à la machine à laver; dans lequel, la machine à laver effectue une action de lavage en fonction des paramètres de programme de lavage acquis; et
le terminal mobile est destiné à recevoir les informations du linge envoyées par le serveur et à afficher les informations du linge à un utilisateur, **caractérisé en ce que** le module sans fil d'identification du linge est un module indépendant monté de manière amovible sur la machine à laver.

2. Système d'identification du linge de la machine à laver selon la revendication 1, dans lequel le module sans fil d'identification du linge dispose des fonctions d'identification de l'étiquettes du linge et de transmission réseau ;
le serveur possède des fonctions de transmission et de réception de données, de décomposition de données, d'analyse de données, de stockage de données, et de traitement de calcul de données;
le terminal mobile possède des fonctions d'affichage d'informations du linge et de traitement de calcul d'informations du linge, et le terminal mobile est un téléphone portable ou un iPad;
la machine à laver est équipée du module sans fil d'identification du linge, de manière à recevoir et à signaler des données et à exécuter une instruction de commande; et un écran de la machine à laver possède des fonctions d'affichage d'informations du linge et de traitement d'informations du linge.

3. Système d'identification du linge de la machine à laver selon l'une quelconque des revendications 1 à 2, dans lequel une étiquette identifiable du linge est une étiquette RFID; le module d'identification du linge est un module d'identification du linge RFID qui est combiné avec le module sans fil pour former le module sans fil d'identification du linge RFID; et le module sans fil est un module Wi-Fi.

4. Système d'identification du linge de la machine à laver selon l'une quelconque des revendications 1 à 3, dans lequel le terminal mobile possède une fonction de liaison d'équipement; le module sans fil dans le module sans fil d'identification du linge possède un mode de configuration réseau qui est un réglage d'usine, de sorte que le terminal mobile effectue la configuration réseau sur le module sans fil pour connecter le module sans fil à un routeur; un bouton pour revenir au réglage d'usine est disposé sur le module sans fil d'identification du linge; et quand le bouton est pressé, le module sans fil d'identification du linge revient au mode de configuration réseau.

5. Procédé de configuration et de liaison d'un module sans fil d'identification du linge du système d'identification du linge de la machine à laver selon l'une quelconque des revendications 1 à 4, comprenant les étapes suivantes:
S1, l'activation d'un module sans fil d'identification du linge pour entrer en mode configuration réseau;
S2, la connexion d'un terminal mobile à un routeur chez soi;
S3, la configuration, grâce au terminal mobile, du module sans fil d'identification du linge;
S4, la connexion du module sans fil d'identification du linge au routeur chez soi; et
S5, la réalisation, grâce au terminal mobile, de la configuration de liaison du module sans fil d'identification du linge et de la machine à laver sous le même réseau.

6. Procédé de configuration et de liaison du module sans fil d'identification du linge du système d'identification du linge de la machine à laver selon la revendication 5, dans lequel les opérations spécifiques des étapes S3 et S4 sont les suivantes:
le terminal mobile configure le module sans fil d'identification du linge sur le routeur selon une application logicielle ou un processus de liaison smartlink pour permettre au module sans fil d'identification du linge d'avoir une fonction de mise en réseau.

7. Procédé de configuration et de liaison du module sans fil d'identification du linge du système d'identification du linge de la machine à laver selon la revendication 5, dans lequel une opération spécifique de l'étape S5 est la suivante:
après l'étape S4, le terminal mobile configure la machine à laver pour qu'elle soit sous le même réseau et établit une relation de liaison entre le module sans fil d'identification du linge et la machine à laver.

8. Procédé d'identification du linge du système d'identification du linge de la machine à laver selon l'une quelconque des revendications 1 à 4, comprenant les étapes suivantes:
S1, l'identification, grâce au module sans fil d'identification du linge, du linge jeté par l'utilisateur pour acquérir les informations de l'étiquette du linge;
S2, l'envoi, grâce au module sans fil d'identification du linge, des informations de l'étiquette du linge au serveur via le module sans fil;
S3, la réalisation, grâce au serveur, de la décomposition des données en fonction des données de l'étiquette et d'une règle de décodage correspondante pour acquérir les informations de linge du linge identifié, la prise d'une décision logique et le calcul des paramètres du programme en fonction des informations du linge,
le renvoi, grâce au serveur, des informations du linge au terminal mobile ou à l'écran d'affichage du terminal de la machine à laver, et le renvoi des paramètres du programme de lavage au panneau de commande d'une machine à laver;
S4, l'affichage du linge par le terminal mobile et/ou le terminal de la machine à laver avec l'écran d'affichage après acquisition des informations du linge; et
S5, le lavage du linge par le terminal de la machine à laver après réception des paramètres du programme de lavage.
